(19) Europäisches Patentamt

European Patent Office

Office européen des brevets

(11) Numéro de publication : **0 465 689 B1**

(12) **FASCICULE DE BREVET EUROPEEN**

(45) Date de publication du fascicule du brevet :
**02.02.94 Bulletin 94/05**

(21) Numéro de dépôt : **90113045.0**

(22) Date de dépôt : **09.07.90**

(51) Int. Cl.⁵ : **A23L 1/308,** A23D 7/00,
A23D 9/00, A23C 9/152,
A23C 9/13, A23L 1/24,
A23G 9/02, A23G 3/00,
A23G 1/00

(54) **Composition alimentaire hypocalorique.**

(43) Date de publication de la demande :
**15.01.92 Bulletin 92/03**

(45) Mention de la délivrance du brevet :
**02.02.94 Bulletin 94/05**

(84) Etats contractants désignés :
**BE CH DE DK ES FR GB IT LI NL SE**

(56) Documents cités :
**EP-A- 0 236 288
US-A- 3 600 186
US-A- 4 005 195**

(73) Titulaire : **SOCIETE DES PRODUITS NESTLE
S.A.
Case postale 353
CH-1800 Vevey (CH)**

(72) Inventeur : **Traitler, Helmut
Ch. Entre 2 Villes 5
CH-1802 Corseaux (CH)**
Inventeur : **Winter, Heike
Rte. de Saint-Légier 25
CH-1800 Vevey (CH)**

## Description

L'invention a trait à une composition alimentaire hypocalorique contenant des lipides dans laquelle une partie au moins des lipides est remplacée par un modérateur calorique constitué par un ester de polyol autre que le glycérol et d'acide gras.

L'alimentation dans les pays développés se caractérise par une consommation excessive de matières grasses qui constituent les nutriments les plus riches du point de vue énergétique. Cette consommation excessive entraîne toute sorte de risques pour la santé, en premier lieu des risques cardiovasculaires. Par ailleurs, certaines anomalies du métabolisme lipidique comme l'hyperlipidémie, l'obésité, le diabète, nécessitent en plus du traitement thérapeutique, l'application de diètes susceptibles de diminuer les quantités de matières grasses, en particulier saturées et de cholestérol ingérées.

Les matières grasses ont cependant d'autres fonctions non nutritives, mais techniques, extrêmement importantes du fait de leurs propriétés physiques particulières et contribuent à la texture et à la saveur de la plupart des aliments. Les habitudes alimentaires bien ancrées interdisent une diminution de leur consommation en dépit des risques encourus, car elles procurent la sensation de satiété.

Pour cette raison, on a cherché à remplacer les matières grasses naturelles dans les aliments par des pseudomatières grasses synthétiques ayant leurs caractéristiques physico-chimiques et organoleptiques qui ne soient pas métabolisées par l'organisme. Une classe de choix de ces composés est constituée d'esters de polyols autres que le glycérol déjà présents dans les aliments naturels. De telles pseudo-matières grasses ne sont pas ou peu hydrolysées par les hydrolases gastro-intestinales, de sorte qu'elles ne sont pas ou peu scindées et résorbées, mais éliminées avec les fèces et ne posent en principe pas de problème de toxicité. Les sucro-esters d'acides gras constituent par exemple de telles pseudo-matières grasses utilisables dans des compositions alimentaires hypocaloriques décrites par exemple dans le brevet US-A-3.600.186. Les sucro-esters présentent cependant l'inconvénient d'être relativement coûteux car leur synthèse est délicate. Par ailleurs, on a constaté qu'ils perturbent le transit intestinal, jusqu'à provoquer des diarrhées.

Nous avons trouvé que des esters d'acides gras et de polyols autres que le glycérol présents en faible quantité dans les lipides tissulaires, en particulier d'animaux marins et dans les graines de certaines céréales avaient la propriété remarquable de n'être pratiquement pas hydrolysés par les hydrolases gastro-intestinales dans des tests <u>in vitro</u> et pratiquement pas absorbés dans des tests <u>in vivo</u> d'ingestion de diètes les contenant. De plus, lors de ces derniers tests, on n'a pas observé d'intolérance ni de perturbation du transit intestinal.

Des composés structurellement semblables sont décrits d'une manière générale dans EP.A.0161.114 comme régulateurs de croissance des plantes. Les esters de 2-méthyl-1,4-butanediol et de 1,3-propanediol avec les acides oléique, linoléique et linolénique sont mentionnés en particulier. Par ailleurs, les esters de 1,2-propanediol et 1,3-butanediol et d'acides gras sont mentionnés entre autres à titre de graisses synthétiques dans US-A 4005195.

La composition alimentaire selon l'invention est caractérisée par le fait que le modérateur calorique est un di- ou triester d'acide gras et de polyol aliphatique en C4-C5 dont les fonctions alcool sont estérifiées et secondaires.

De préférence, le polyol aliphatique est choisi parmi les polyols connus pour leur inocuité et présents dans la partie lipidique des matières premières d'origine animale ou végétale les contenant. On peut mentionner à titre d'exemple le 2,3-butanediol.

Dans cette catégorie le polyol est pourvu de fonctions alcool secondaire et donc sans fonction alcool primaire. En effet, on a constaté que l'hydrolyse par les lipases intervenait préférentiellement sur les esters d'alcool primaire et que, par conséquent, le taux d'absorption du modérateur calorique était proportionnel au rapport entre alcool primaire et secondaire. A titre d'exemple, le 2,3-butanediol est préféré car ses esters ne sont pratiquement pas absorbés.

La nature du ou des acides gras est dictée par les propriétés physico-chimiques souhaitées du modérateur calorique dans le cadre d'une application particulière. A cet égard, le modérateur calorique doit être compatible avec les lipides qu'il est destiné à remplacer, c'est-à-dire de préférence comporter les mêmes acides gras, avantageusement dans les mêmes proportions que les dits lipides. De préférence, les acides gras mis en oeuvre sont en C16-C22.

La composition alimentaire selon l'invention peut être une émulsion de forme huile dans l'eau ou eau dans l'huile. Parmi les premières, on peut citer le lait entier reconstitué, les crèmes glacées, les mayonnaises, les sauces pour salade ou "salad dressings", etc.; parmi les secondes, on peut citer les pâtes à fourrer ou à tartiner, salées ou sucrées, les margarines, les émulsions de viande, les crèmes à café ou pâtissières.

Une émulsion peut se présenter sous forme liquide, pâteuse (semi-solide) ou solide c'est-à-dire dans ce dernier cas séchée reconstituable avec l'eau, par exemple dans le cas d'un lait entier ou d'une crème à café. Une émulsion précédente peut être gélifiée, par exemple dans le cas des laits acidifiés, des yaourts et des desserts.

La composition peut être une dispersion de particules solides dans de la matière grasse, comme par exemple les masses d'enrobage et le chocolat.

La teneur en matière grasse d'une composition est généralement comprise entre 10 et 90% en poids. Le modérateur calorique peut constituer 10 à 100% en poids de la phase lipidique suivant l'effet modérateur de calories que l'on désire obtenir. En effet, on a constaté que le taux d'absorption d'un mélange du modérateur calorique et d'une matière grasse était inversément proportionnel à la teneur en modérateur calorique du mélange.

Dans certaines applications, par exemple comme huile de friture, le modérateur calorique peut être utilisé seul ou en mélange avec une huile. Dans cette application, l'excellente stabilité à l'hydrolyse et aux traitements thermiques du modérateur calorique constitue un avantage très important.

Le taux d'incorporation du modérateur calorique sera avantageusement de 10 à 90% en poids du mélange lipidique pour les graisses lactiques et les huiles végétales d'utilisation courante.

Une application particulière est le remplacement partiel du beurre de cacao ou de la graisse lactique dans le chocolat ou les masses de fourrage ou d'enrobage. Dans ce cas, le taux d'incorporation compatible avec les propriétés physico-chimiques du beurre de cacao est 10 à 15% en poids par rapport au beurre de cacao pour le chocolat ou jusqu'à 100% pour les masses de fourrage ou d'enrobage.

Le modérateur calorique peut être préparé de manière connue par estérification chimique du polyol avec l'acide gras ou le mélange d'acides gras sans faire intervenir de solvant organique, méthode ayant été appliquée à la réestérification d'acides gras avec le glycérol décrite par exemple dans Fat.Sci. Technol. 89, 480-485. L'estérification a lieu dans un réacteur équipé de moyens d'agitation, de moyens de maintien de la température à une valeur proche de la température de reflux du mélange des réactifs et de moyens d'évacuation par distillation de l'eau formée en cours de réaction. On conduit la réaction en présence d'un catalyseur, par exemple le chlorure de zinc, avec un léger excès de polyol à 150-170°C, pendant 2-4h. On applique ensuite un vide de 2,7-27 mb (2-20mm Hg) et on poursuit la distillation pendant 1-3h.

Après refroidissement du mélange à la température ambiante, on le reprend par un solvant, par exemple l'hexane et on sépare le chlorure de zinc par filtration. On peut ensuite purifier le produit obtenu soit par chromatographie, par exemple sur alumine. En variante, on passe directement sans reprise par un solvant au raffinage sans dégommage c'est-à-dire par neutralisation, décoloration, évaporation du solvant et enfin désodorisation.

Dans une variante de synthèse, on peut conduire l'estérification également de manière connue, par voie enzymatique au moyen d'une lipase non-spécifique, par exemple de levure. On peut ainsi utiliser par exemple une lipase de Candida cylindracea. Pour ce faire, dans un procédé par charges, on met les acides gras en solution dans un hydrocarbure, par exemple le n-heptane ou le n-hexane par exemple à une concentration pondérale de 2-10%. On mélange le polyol avec environ 10% d'eau contenant un excès d'enzyme par rapport aux acides gras, par exemple de 3 parties pondérales d'enzyme environ pour 2 parties d'acide gras. On met en présence les phases aqueuse (de pH environ 7,2) et organique sous forte agitation à une température de 20-55°C, de préférence à 40-45°C. La réaction, en milieu hétérogène, a lieu à l'interface entre les deux phases et est déplacée vers la formation d'ester, du fait que celui-ci passe dans la phase organique au fur et à mesure de sa production.

Selon une variante préférée en continu de cette synthèse enzymatique, on peut mettre les réactifs en présence d'une enzyme immobilisée, par exemple sur résine, silice ou tissus, dans un réacteur, ce qui permet d'utiliser une quantité moindre d'enzyme.

Le modérateur calorique peut être avantageusement protégé de l'oxydation en y incorporant un antioxydant, de préférence liposoluble, p.ex. un tocophérol ou le palmitate d'ascorbyle.

L'invention concerne enfin un procédé de fabrication d'un aliment hypocalorique, caractérisé par le fait que l'on incorpore dans un tel aliment un modérateur calorique tel que défini précédemment.

Selon une application particulière destinée à la fabrication d'un aliment frit, par exemple des pommes de terre, des nouilles, de la viande ou du poisson pané, un légume ou fruit enrobé d'une pâte à frire, le procédé est caractérisé par le fait que l'on frit un tel aliment en présence d'un modérateur calorique tel qu'indiqué précédemment.

Les exemples ci-après illustrent l'invention. Dans ceux-ci, les parties et pourcentages sont pondéraux sauf indication contraire.

Exemple 1

On mélange 56,4 g d'un mélange d'acide gras contenant:

|  | % |
|---|---|
| Acide oléique | 70 |
| Acide stéarique | 10 |
| Acide palmitique | 10 |
| Acide linoléique | 5 |
| Acides myristique, palmitoléique et | |
| arachidique | 5 |

avec 0,56 g de chlorure de zinc dans un réacteur muni d'un agitateur et on chauffe le mélange à 160°C sous agitation. Durant le chauffage, on purge le réacteur à l'azote. On ajoute ensuite progressivement 9 g de 2,3-butanediol sous forme de racémate sous agitation. Le réacteur est pourvu d'un réfrigérant descendant maintenu à 15°C par circulation d'eau froide. Après 3h de réaction à 160°C, on applique un vide de 5 mb et on élimine en continu l'eau avec le 2,3-butanediol restant en 2h par évaporation. Après purification du liquide obtenu par passage d'une solution de proportion 1:1 dans l'hexane sur une colonne d'oxyde d'aluminium, on recueille un ester purifié contenant environ 0,2% d'acides gras libres, d'indice de réfraction 1,4635 à 20°C, de viscosité 49 mPa.s à 20°C et de densité 0,895 (g/cm$^3$) à 22,4°C.

Le produit purifié, de couleur jaune pâle est inodore et se comporte comme une huile végétale neutre, par exemple l'huile de tournesol du point de vue des propriétés physiques, en particulier de la stabilité à la chaleur.

Exemple 2

On chauffe 2 mole du mélange d'acides gras mis en oeuvre dans l'exemple 1 avec 1% de chlorure de zinc à 160°C sous agitation et on y ajoute progressivement 1,15 mole de 2,3-butanediol (racémate). On laisse réagir le mélange pendant 3h à cette température, période durant laquelle on évacue continuellement l'eau formée sous forme de vapeur. On applique ensuite un vide de 13mb (10 mm Hg), puis on poursuit la réaction dans ces conditions pendant 2h. Après refroidissement à la température ambiante, on sépare le chlorure de zinc par filtration. Après neutralisation, décoloration, et enfin désodorisation, on recueille un produit jaune pâle inodore et insipide de propriétés physiques comparables à celle d'une huile neutre.

Exemple 3

On procède comme à l'exemple 2 en faisant réagir le 2,3 -butanediol (racémate) avec le mélange d'acides gras suivant:

|  | % |
|---|---|
| Acide laurique | 13 |
| Acide stéarique | 33 |
| Acide palmitique | 23 |
| Acide oléique | 28 |
| Autres acides | 3 |

Le produit obtenu est solide à la température ambiante, de 20°C.

Il se comporte de manière semblable au beurre de cacao du point de vue des caractéristiques de fusion comme cela apparaît de l'étude de l'indice de graisse solide (SFI) obtenu par la détermination de la courbe de fusion. Ainsi le SFI, pourcentage de "graisse" solide existant dans le "corps gras" partiellement fondu à une température donnée, déterminé par RMN (résonance magnétique nucléaire du proton) pulsée (I.U.P.A.C., 1er supplément, 1982, méthode 2.323) est indiqué ci-après en comparaison avec celui du beurre de cacao:

4

| SFI (%) | Température (°c) | | | | | |
|---|---|---|---|---|---|---|
| | 5 | 10 | 20 | 30 | 37 | 40 |
| Produit de l'exemple 3 | 73 | 68 | 63 | 48 | 12 | 5 |
| Beurre de cacao | 85 | 82 | 73 | 40 | 8 | 0 |

Exemple 4

4.1 Etude d'ingestion de diète contenant le modérateur calorique chez les rats obèses

4.1.1. Conditions expérimentales

On sépare 9 rats mâles de 8 semaines en deux groupes de 4 et 5 pris au hasard mais de manière que les poids moyens initiaux dans chaque groupe soient égaux. On alimente les deux groupes à volonté avec une diète standard dans laquelle on remplace 10% de la diète par (A) de l'huile de germes de maïs et (B) le produit de l'exemple 2 pendant 35 j.

On pèse les rats 2 fois par semaine aux jours 3 et 7 et on observe leur poil, anus, fèces ainsi que leur comportement.

On pèse la diète fournie et la diète restante à chaque prise (la diète mangée est obtenue par différence) et on renouvelle la ration à intervalles réguliers en utilisant toujours la même quantité. On détermine ensuite la diète ingérée cumulée par animal.

Après 5 semaines, on sacrifie les animaux et on recueille leur sang et on sépare le plasma. On extrait chaque coeur et chaque foie que l'on lave et congèle immédiatement, puis on conserve les organes à -40°C en vue de leur analyse.

4.1.2 Résultats

Les résultats relatifs à l'évolution des poids sont indiqués dans le tableau I ci-après:

TABLEAU 1

GROUPE

| Jour | A | | | B | | | Différence de |
| | Gain de poids moyen (g) | Poids moyen (g) | Diète ingérée cumulée moyenne (g) | Gain de poids moyen (g) | Poids moyen (g) | Diète ingérée cumulée moyenne (g) | gain de poids A-B (g) |
| --- | --- | --- | --- | --- | --- | --- | --- |
| 0 | 0 | 249 | 0 | 0 | 249, | 0 | 0 |
| 3 | 27 | 276 | 83,6 | 22 | 271 | 85,7 | 5 |
| 7 | 62 | 311 | 203,8 | 54 | 303 | 213,2 | 8 |
| 10 | 88,6 | 337,6 | 291,8 | 75,1 | 324,1 | 301,5 | 13,5 |
| 14 | 122 | 371 | 416,7 | 102,5 | 351,5 | 423,5 | 19,5 |
| 17 | 143,3 | 392,3 | 501,2 | 116,2 | 365,2 | 508,3 | 27,1 |
| 21 | 169,5 | 418,5 | 618,3 | 137,4 | 386,4 | 622,9 | 32,1 |
| 24 | 188,4 | 437,4 | 705,4 | 148,3 | 397,3 | 704,6 | 40,1 |
| 28 | 209,9 | 458,1 | 827,8 | 166,4 | 415,4 | 824 | 43,5 |
| 31 | 224,3 | 473,3 | 917,4 | 174,4 | 423,4 | 918,8 | 49,9 |
| 35 | 247,2 | 496,2 | 1033,6 | 191,6 | 440,6 | 1031,4 | 55,6 |

On a observé une différence de prise de poids notable dès le début du régime entre le groupe A (diète contenant l'huile de germes de maïs) et le groupe B (diète contenant le modérateur calorique), le groupe A grossissant nettement plus rapidement que le groupe B.

La diète du groupe B contenait environ 6% de matière grasse digestible, dont 17% d'acide linoléique et 1,8% d'acide alpha-linolénique. Ces valeurs sont standards pour les diètes de laboratoire communes et sont considérées comme suffisantes pour éviter des déficiences lipidiques chez le rat.

La croissance plus rapide du groupe A a persisté tout au long de l'expérience et résulté en une différence de gain de poids de 22,5% entre les deux groupes ainsi qu'une différence de poids total de 11,2%.

La différence énergétique entre les deux diètes, basée sur une énergie métabolisable de 3,16 kcal/g pour la diète standard représente 24% en supposant que l'apport calorique du modérateur calorique est nul. Ceci est en corrélation presque parfaite avec la différence de gain de poids observée de 22,5%. Il en résulte que le modérateur calorique dans le groupe B n'est pas métabolisé et que sa contribution calorique est proche de zéro.

En ce qui concerne la prise de nourriture, il n'y a pas eu de différence notable entre les quantités ingérées dans les deux groupes tout au long de l'étude. La légère différence observée a représenté 2,2 g pour le groupe B sur plus de 1'000 g de prise moyenne-totale par animal, soit 0,2%.

Les résultats suggèrent:
- qu'il n'y a pas de préférence ou de rejet de l'une ou l'autre diète pour des raisons organoleptiques et
- que le fait que la diète du groupe B ait une moindre densité calorique ne conduit pas les animaux à manger plus pour compenser, mais que la présence du modérateur leur donne la même sensation de satiété que par exemple l'huile de germes de maïs de la diète du groupe A.

Ces observations sont restées valables pendant toute la durée du régime. Il n'y a pas eu de changement majeur des habitudes alimentaires des animaux dans les deux groupes.

Enfin, on n'a observé aucun phénomène anormal chez les animaux: les animaux des deux groupes ont eu des poils secs non graisseux, un anus non graisseux, des selles consistantes et n'ont présenté aucun signe de diarrhées. Les selles du groupe B ont été graisseuses mais dures. Il apparaît donc qu'aucun effet perturbateur du transit intestinal ne peut être attribué au régulateur calorique.

Une analyse des lipides tissulaires du coeur et du foie n'a montré aucune trace de diol ester non-modifié accumulé dans les organes. Les deux groupes ont montré la présence de légères quantités des diols esters que l'on observe habituellement dans le foie.

4.2. Etude d'ingestion du modérateur calorique chez les souris normales

On a alimenté 5 jeunes souris femelles recevant une diète standard et de l'eau à volonté avec 20 ml de produit de l'exemple 1 par kg de poids corporel par gavage en une dose unique. On a pesé les animaux aux jours 1,2,3,4,5,8,12, et 15.

L'observation des animaux n'a montré aucune toxicité, mortalité ou comportement anormal. La partie anale des animaux est devenue graisseuse 1h1/2 après l'administration du produit mais ce phénomène a disparu après 24h. La prise de poids a été d'environ 10% en 15 jours.

Exemple 5

Mayonnaise hypocalorique

On prépare deux formulations de type "mayonnaise" (huile dans l'eau) ayant les compositions indiquées sous (A), (B) et (C); les produits ont des caractéristiques organoleptiques comparables mais une valeur calorique sensiblement différente:

|                                                      | (A)   | (B)   | (C)   |
| ---------------------------------------------------- | ----- | ----- | ----- |
| Huile de tournesol                                   | 81    | 41    | --    |
| Ester de 2,3-butanediol liquide de l'exemple 2       | --    | 40    | 81    |
| Jaune d'oeuf                                          | 5     | 5     | 5     |
| Vinaigre                                             | 4     | 4     | 4     |
| Sel                                                  | 1,5   | 1,5   | 1,5   |
| Sucre                                                | 1,5   | 1,5   | 1,5   |
| Arômes                                               | 0,8   | 0,8   | 0,8   |
| Eau pour compléter à 100                             | --    | --    | --    |
| Kcal/100 g                                           | 780   | 422   | 53    |
| KJ/100 g                                             | 3'270 | 1'770 | 222   |

Exemple 6

Sauce de salade hypocalorique

On prépare des sauces de salade qui sont des émulsions huile dans l'eau dont la phase aqueuse contient du vinaigre; l'amidon est utilisé comme épaississant.

Les compositions données sous (D), (E) et (F) ci-dessous illustrent la diminution de la valeur calorique obtenue par l'utilisation du modérateur calorique.

8

|                                  | (D)   | (E)    | (F)  |
|----------------------------------|-------|--------|------|
| Huile de tournesol               | 42    | 20     | --   |
| Ester de 2,3-butanediol liquide  |       |        |      |
| de l'exemple 2                   | --    | 22     | 42   |
| Jaune d'oeuf                     | 5     | 5      | 5    |
| Sel                              | 4     | 4      | 4    |
| Sucre                            | 3     | 3      | 3    |
| Amidon                           | 9     | 9      | 9    |
| Vinaigre                         | 15    | 15     | 15   |
| Epices                           | 3     | 3      | 3    |
| Eau pour compléter à 100         | --    | --     | --   |
| Kcal/100 g                       | 473   | 274    | 94   |
| KJ/100 g                         | 1'985 | 1'150  | 394  |

Exemple 7

Chocolat hypocalorique

On mélange l'ester de 2,3-butanediol solide à la température ambiante de l'exemple 3 avec le beurre de cacao et/ou les succédanés du beurre de cacao dans les proportions indiquées ci-après, ce qui permet de préparer des chocolats ou des couvertures ayant les mêmes caractéristiques physiques et organoleptiques, mais à teneur réduite en calories, pour les compositions de chocolat (H), (H) et (I) comme indiqué ci-après:

|                              | (G)    | (H)    | (I)    |
|------------------------------|--------|--------|--------|
| Solides de cacao (mat.       |        |        |        |
| grasse 55%)                  | 32,8*  | 32,8*  | 32,8*  |
| Saccharose                   | 48,3   | 48,3   | 48,3   |
| Beurre de cacao              | 19,2   | 12     | --     |
| Ester de 2,3-butanediol de   |        |        |        |
| l'exemple 3                  | --     | 7,2    | 19,2   |
| Lécithine de soja            | 0,3    | 0,3    | 0,3    |
| Arômes                       | traces | traces | traces |
| Kcal/100 g                   | 560    | 495    | 387    |
| KJ/100 g                     | 2'350  | 2'070  | 1'621  |

* correspond à 30 de matière sèche.

9

Si dans la composition I, on remplace le saccharose par un sucre, le PALATINIT®, édulcorant massique acariogène, de valeur énergétigue réduite constitué d'un mélange de glucosylsorbitol et de glucosylmannitol, fournissant 50% des calories de celui-ci, on obtient un chocolat de 290 Kcal ou 1215 KJ/100 g.

**Revendications**

1.  Composition alimentaire hypocalorique contenant des lipides dans laquelle une partie au moins des lipides est remplacée par un modérateur calorique constitué par un ester de polyol autre que le glycérol et d'acide gras, caractérisée par le fait que le modérateur calorique est un di- ou triester d'acide gras et de di- ou triol aliphatique en C4-C5 dont les fonctions alcool sont estérifiées et secondaires.

2.  Composition selon la revendication 1, caractérisée par le fait que le modérateur calorique est un diester de 2,3-butanediol et d'acide gras en C16-C22.

3.  Composition selon la revendication 2, caractérisée par le fait que le modérateur calorique est un diester de 2,3-butanediol et d'un mélange d'acides gras contenant les acides oléique, palmitique, stéarique et linoléique.

4.  Composition selon la revendication 1, caractérisée par le fait qu'elle contient au moins 10% en poids de modérateur calorique dans la partie lipidique.

5.  Composition selon la revendication 4, sous forme d'émulsion liquide huile dans l'eau, notamment de mayonnaise ou de sauce à salade.

6.  Composition selon la revendication 4, sous forme d'émulsion solide ou semi-solide eau dans l'huile, notamment de margarine, de pâte à tartiner, de shortening ou de poudre de lait entier.

7.  Composition selon la revendication 4, sous forme de crème glacée.

8.  Composition selon la revendication 4, sous forme d'huile de friture.

9.  Composition selon la revendication 4, sous forme de dispersion solide, notamment de chocolat, de masse d'enrobage ou de fourrage.

10. Composition selon la revendication 4, sous forme d'émulsion gélifiée, notamment de lait acidifié, de yaourt ou de dessert.

11. Procédé de fabrication d'un aliment hypocalorique, caractérisé par le fait que l'on incorpore dans un tel aliment à titre de modérateur calorique un di- ou triester d'acide gras et de di- ou triol aliphatique en C4-C5 dont les fonctions alcool sont estérifiées et secondaires.

12. Procédé de fabrication d'un aliment frit hypocalorique, caractérisé par le fait que l'on frit un tel aliment en présence, à titre de modérateur calorique, d'un di- ou triester d'acide gras et de di- ou triol aliphatique en C4-C5 dont les fonctions alcool sont estérifiées et secondaires.

**Patentansprüche**

1.  Kalorienarme Nahrungsmittelzusammensetzung, die Lipide enthält und in der wenigstens ein Teil der Lipide durch einen Kalorienmoderator ersetzt ist, der aus einem anderen Polyolester als Glycerol und Fettsäure besteht, dadurch gekennzeichnet, daß der Kalorienmoderator ein Di- oder Triester aus Fettsäure und einem aliphatischen C4-C5-Di- oder -Triol ist, dessen Alkoholfunktionen verestert und sekundär sind.

2.  Zusammensetzung nach Anspruch 1, dadurch gekennzeichnet, daß der Kalorienmoderator ein Diester aus 2,3-Butandiol und C16-C22-Fettsäure ist.

3.  Zusammensetzung nach Anspruch 2, dadurch gekennzeichnet, daß der Kalorienmoderator ein Diester aus 2,3-Butandiol und einem Gemisch von Fettsäuren ist, das Ölsäure, Palmitinsäure, Stearinsäure und Linolsäure enthält.

4. Zusammensetzung nach Anspruch 1, dadurch gekennzeichnet, daß sie wenigstens 10 Gew.-% Kalorienmoderator im Lipidanteil enthält.

5. Zusammensetzung nach Anspruch 4 in Form einen flüssigen Öl-in-Wasser-Emulsion, insbesondere Majonnaise oder Salatsoße.

6. Zusammensetzung nach Anspruch 4 in Form einer festen oder halbfesten Wasser-in-Öl-Emulsion, insbesondere Margarine, Brotaufstrich, Shortening oder Vollmilchpulver.

7. Zusammensetzung nach Anspruch 4 in Form von Eiscreme.

8. Zusammensetzung nach Anspruch 4 in Form von Frittieröl.

9. Zusammensetzung nach Anspruch 4 in Form einer festen Dispersion, insbesondere Schokolade, Überzugsmasse oder Füllmasse.

10. Zusammensetzung nach Anspruch 4 in Form einer gelierten Emulsion, insbesondere saure Milch, Joghurt oder Dessert.

11. Verfahren zur Herstellung eines kalorienarmen Nahrungsmittels, dadurch gekennzeichnet, daß einem solchen Nahrungsmittel als Kalorienmoderator ein Di- oder Triester aus Fettsäure und einem aliphatischen C4-C5-Di- oder -Triol beigegeben wird, dessen Alkoholfunktionen verestert und sekundär sind.

12. Verfahren zur Herstellung eines frittierten kalorienarmen Nahrungsmittels, dadurch gekennzeichnet, daß ein solches Nahrungsmittel in Anwesenheit eines als Kalorienmoderator dienenden Di- oder Triesters aus Fettsäure und einem aliphatischen C4-C5-Di- oder -Triol frittiert wird, dessen Alkoholfunktionen verestert und sekundär sind.

## Claims

1. A hypocaloric food composition containing lipids in which the lipids are at least partly replaced by a caloric moderator consisting of an ester of a polyol other than glycerol and fatty acid, characterized in that the caloric moderator is a diester or triester of a fatty acid and an aliphatic $C_{4-5}$ diol or triol of which the alcohol functions are esterified and secondary.

2. A composition as claimed in claim 1, characterized in that the caloric moderator is a diester of 2,3-buta-nediol and a $C_{16-22}$ fatty acid.

3. A composition as claimed in claim 2, characterized in that the caloric moderator is a diester of 2,3-butanediol and a fatty acid mixture containing oleic, palmitic, stearic and linoleic acids.

4. A composition as claimed in claim 1, characterized in that it contains at least 10% by weight caloric moderator in the lipid part.

5. A composition as claimed in claim 5 in the form of a liquid oil-in-water emulsion, more particularly a mayonnaise or salad dressing.

6. A composition as claimed in claim 4 in the form of a solid or semisolid water-in-oil emulsion, more particularly margarine, spreading paste, shortening or whole milk powder.

7. A composition as claimed in claim 4 in the form of ice cream.

8. A composition as claimed in claim 4 in the form of frying oil.

9. A composition as claimed in claim 4 in the form of a solid dispersion, particularly chocolate, coating or filling paste.

10. A composition as claimed in claim 4 in the form of a gelled emulsion, particularly acidified milk, yoghurt or dessert.

11. A process for the production of a hypocaloric food, characterized in that a diester or triester of a fatty acid and a $C_{4-5}$ aliphatic diol or triol of which the alcohol functions are esterified and secondary is incorporated as caloric moderator in the food.

12. A process for the production of a hypocaloric fried food, characterized in that the food is fried in the presence of a diester or triester of a fatty acid and a $C_{4-5}$ aliphatic diol or triol of which the alcohol functions are esterified and secondary as caloric moderator.